# DEMANDE DE BREVET EUROPEEN

(11) **EP 0 852 903 A1**
(43) Date de publication de la demande: **15.07.1998**
(21) Numéro de dépôt: 98870002.7
(22) Date de dépôt: 06.01.1998
(51) Int. Cl.: A01D 31/00

(54) **Machine pour récolter des poireaux et son utilisation**

(30) Priorité: 08.01.1997 BE 9700016
(71) Demandeur: Verhoest, Marc, 8800 Rumbeke (BE)
(72) Inventeur: Verhoest, Marc, 8800 Rumbeke (BE)
(74) Mandataire: Powis de Tenbossche, Roland

(57) **Abrégé**

Machine pour récolter des poireaux alignés le long d'une ou de lignes de plantation parallèles, cette machine comprenant un châssis mobile comprenant :
* un outil destiné à être engagé dans la terre sensiblement sous les poireaux à récolter pour les soulever du sol,
* un dispositif de préhension et de mise en mouvement des poireaux soulevés,
* des moyens pour éliminer de la terre attachée aux poireaux au cours de leur déplacement par le dispositif de préhension ;
* des moyens de coupe de la partie inférieure et de la partie supérieure des poireaux lors de leur déplacement par le dispositif de préhension.

## Description

La présente invention a pour objet une machine pour récolter des poireaux alignés le long d'une ou de lignes de plantation parallèles.

On connaît par le document NL-A- 9200248 une machine pour récolter des légumes hors de la terre et pour les nettoyer. Cette machine connue comporte une bande transporteuse pour amener les légumes récoltés vers des moyens de lavage ou nettoyage pour séparer la terre collant ou attachée aux légumes. Cette machine connue ne permet pas dans le cas de poireaux d'éliminer automatiquement et lors de la récolte la partie inférieure ou racine des poireaux, ni la partie supérieure ou verdure des poireaux. De plus de grands volumes d'eau sont nécessaires pour le nettoyage des légumes.

La machine suivant l'invention comprend un châssis mobile comprenant :
* un outil destiné à être engagé dans la terre sensiblement sous les poireaux à récolter pour les soulever du sol, lesdits poireaux présentant une partie inférieure attachée aux racines, une partie supérieure constituée de feuilles de poireaux. et une partie centrale située entre la partie inférieure et la partie supérieure ;
* un dispositif de préhension et de mise en mouvement des poireaux soulevés. ce dispositif étant avantageusement constitué :
   - d'une première série de deux bandes transporteuses présentant des faces tournées l'une vers l'autre et définissant entre elles un canal le long duquel les poireaux sont guidés et maintenus en position. ledit canal présentant une extrémité d'entrée des poireaux soulevés du sol dans le canal et une extrémité de sortie des poireaux.
   - d'au moins un moteur pour entraîner en mouvement les bandes transporteuses de la première série de manière à ce que les faces tournées l'une vers l'autre des bandes se déplacent dans une même direction pour déplacer les poireaux depuis l'extrémité d'entrée jusqu'à l'extrémité de sortie.
   - d'une deuxième série de bandes transporteuses présentant des faces tournées l'une vers l'autre et définissant entre elles un canal le long duquel les poireaux sont guidés et maintenus en position, ledit canal présentant une extrémité d'entrée des poireaux provenant de la première série et une extrémité de sortie des poireaux,
   - d'au moins un moteur pour entraîner en mouvement les bandes transporteuses de la deuxième série de manière à ce que les faces tournées l'une vers l'autre des bandes se déplacent dans une même direction pour déplacer les poireaux depuis l'extrémité d'entrée jusqu'à l'extrémité de sortie.
* des moyens pour éliminer de la terre attachée aux poireaux au cours de leur déplacement par le dispositif de préhension ;
* des moyens de coupe de la partie inférieure et de la partie supérieure des poireaux lors de leur déplacement par le dispositif de préhension.

De façon avantageuse. elle comporte des moyens agissant sur les poireaux ou une partie de ceux-ci pour les amener ou les maintenir debout ou droit par rapport au sol avant que ceux-ci soient soulevés par l'outil hors du sol, lesdits moyens étant constitués de deux supports entre lesquels passent les poireaux à récolter, lesdits supports étant munis de poils flexibles et étant entraînés en rotation par un moteur. De préférence. lesdits supports sont entraînés en rotation chacun le long d'un axe. de préférence incliné par rapport au sol et s'étendant chacun entre une extrémité arrière tournée vers le dispositif de préhension et une extrémité avant opposée à l'extrémité arrière. les poils portés par lesdits supports au voisinage de l'extrémité avant ayant une longueur moindre que celle des poils portés par lesdits supports au voisinage de l'extrémité arrière. de sorte que les poireaux sont soulevés progressivement du sol. Un tel soulèvement ou redressement progressif des poireaux ou partie de ceux-ci (verdure ou partie haute) permet de ne pas endommager les poireaux.

Le redressement des poireaux par rapport au sol permet une manipulation plus aisée des poireaux soulevés hors du sol puisque les poireaux sont engagés de manière régulière et correcte dans le dispositif de préhension.

De préférence, les supports ont une forme sensiblement en tronc de cône ou en cône, la surface latérale duquel portant les poils flexibles. Cette forme est avantageuse car elle permet un redressement progressif du poireau lors du mouvement d'avancement de la machine.

Selon une forme de réalisation avantageuse. les moteurs sont adaptés pour entraîner un premier support dans le sens anti-horlogique et le deuxième support dans le sens horlogique pour soulever ou redresser les poireaux ou feuilles de poireaux situés entre les supports en rotation.

Par exemple. les supports ont une longueur comprise entre 50 et 150 mm et un diamètre maximum inférieur à 100 mm.

Selon une forme de réalisation particulière. les poils sont disposés en rangées ou lignes s'étendant entre la pointe et la partie arrière du support. tandis que la longueur des poils croît progressivement depuis l'extrémité avant vers l'extrémité arrière.

Selon un détail avantageux d'une forme de réalisation, les poils flexibles, avant flexion, sont sensiblement perpendiculaires à la surface latérale du support.

Selon une forme de réalisation, le premier moyen de coupe de la partie inférieure et le deuxième moven de coupe de la partie supérieure du poireau sont situés respectivement au voisinage de l'entrée de la deuxième série de bandes transporteuses et au voisinage de la sortie de la deuxième série de bandes transporteuses.

Selon une variante avantageuse de la machine. elle comporte une série de deux tambours entraînés en rotation par un moteur et situés sous la deuxième série de bandes transporteuses, lesdits tambours présentant une surface latérale cylindrique munie de protubérances élastiques, lesdits tambours étant espacés l'un de l'autre pour former entre eux un espace dans lequel les poireaux sont partiellement en contact avec les surfaces latérales cylindriques des tambours.

La machine suivant l'invention comporte avantageusement des moyens pour ajuster la position des moyens de coupe par rapport au moyen de préhension.

L'invention a encore pour objet un procédé pour récolter des poireaux alignés le long d'une ou de lignes de plantation parallèles, au moyen d'une machine suivant l'une quelconque des revendications précédentes, lesdits poireaux présentant une partie inférieure attachée aux racines, une partie supérieure constituée de feuilles de poireaux, et une partie centrale située entre la partie inférieure et la partie supérieure, dans lequel
* on soulève du sol les poireaux à récolter en engageant dans la terre sensiblement sous les poireaux à récolter un outil ;
* on déplace les poireaux soulevés du sol en engageant lesdits poireaux dans le canal formé entre les faces tournées l'une vers l'autre des bandes transporteuses de la première série, lesdites faces étant entraînées dans une même direction pour déplacer les poireaux depuis l'extrémité d'entrée jusqu'à l'extrémité de sortie,
* on déplace les poireaux sortant de la première série de bandes transporteuses en engageant lesdits poireaux dans le canal formé entre les faces tournées l'une vers l'autre des bandes transporteuses de la deuxième série, lesdites faces étant entraînées dans une même direction pour déplacer les poireaux depuis l'extrémité d'entrée jusqu'à l'extrémité de sortie d'une deuxième série de bandes transporteuses,
* on élimine de la terre attachée aux poireaux au cours de leur déplacement par des bandes transporteuses : et
* on coupe la partie inférieure et la partie supérieure des poireaux lors de leur déplacement par des bandes transporteuses.

De façon avantageuse, on amène ou maintient les poireaux ou une partie de ceux-ci (verdure ou partie haute) sensiblement droit ou debout avant que ceux-ci soient soulevés par l'outil hors du sol, en soumettant les poireaux avant leur soulèvement par l'outil à l'action de poils flexibles de deux supports, chacun desdits supports étant mis en rotation.

De façon avantageuse, on soumet les poireaux avant leur soulèvement par l'outil, à l'action de poils flexibles de deux supports. chacun desdits supports étant mis en rotation le long d'un axe incliné par rapport au sol et s'étendant chacun entre une extrémité arrière tournée vers le dispositif de préhension et une extrémité avant opposée à l'extrémité arrière, les poils portés par lesdits supports au voisinage de l'extrémité avant ayant une longueur moindre que celle des poils portés par lesdits supports au voisinage de l'extrémité arrière, de manière à soulever ou redresser progressivement les poireaux pour les amener dans une position sensiblement debout ou droite.

De préférence, on met en rotation des supports de forme sensiblement en tronc de cône ou en cône, la surface latérale duquel portant les poils flexibles, pour redresser progressivement les poireaux ou une partie de ceux-ci (feuilles) avant leur soulèvement par l'outil.

En particulier, on entraîne en rotation un premier support dans le sens anti-horlogique et le deuxième support dans le sens horlogique pour soumettre le ou les poireaux situés entre les supports en rotation à un effort vers le haut.

Selon une forme de réalisation du procédé suivant l'invention, on soumet les poireaux avant leur soulèvement à l'action de poils de longueur croissant progressivement depuis l'extrémité avant vers l'extrémité arrière des supports. De préférence, on soumet les poireaux à l'action de poils flexibles, qui. avant flexion, sont sensiblement perpendiculaires à la surface latérale du support.

Selon un détail d'un procédé suivant l'invention, on coupe la partie inférieure et la partie supérieure du poireau respectivement au voisinage de l'entrée de la deuxième série de bandes transporteuses et au voisinage de la sortie de la deuxième série de bandes transporteuses.

Selon une caractéristique avantageuse, lors du déplacement des poireaux par la deuxième série de bandes transporteuses, on soumet les poireaux à l'action d'une série de deux tambours entraînés en rotation, lesdits tambours présentant une surface latérale cylindrique munie de protubérances élastiques, lesdits tambours étant espacés l'un de l'autre pour former entre eux un espace dans lequel les poireaux ou une partie de ceux-ci sont partiellement en contact avec les surfaces latérales cylindriques des tambours.

L'invention a encore pour objet un procédé pour récolter des poireaux alignés le long d'une ou de lignes de plantation parallèles, au moyen d'une machine suivant l'une quelconque des revendications précédentes, lesdits poireaux présentant une partie inférieure attachée aux racines, une partie supérieure constituée de feuilles de poireaux, et une partie centrale située entre la partie inférieure et la partie supérieure, dans lequel avant de soulever du sol les poireaux au moyen d'un outil engagé dans le sol, on soumet les poireaux ou une partie de ceux-ci, en particulier au moins la partie supérieure de ceux-ci. à l'action de poils flexibles de deux supports mis en rotation le long d'un axe incliné par rapport au sol de manière à soulever progressivement les poireaux ou une partie de ceux-ci pour les amener dans une position sensiblement debout ou droite. Dans ce procédé, on entraîne avantageusement en rotation un premier support dans le sens anti-horlogique et le deuxième support dans le sens horlogique pour exercer un effort vers le haut sur les poireaux ou partie de ceux-ci situés entre les supports en rotation.

Des particularités et détails de l'invention ressortiront de la description détaillée suivante. dans laquelle il est fait référence aux dessins ci-annexés qui montrent une machine suivant l'invention et son fonctionnement.

Dans ces figures.
* la figure 1 est une vue latérale d'une machine suivant l'invention ;

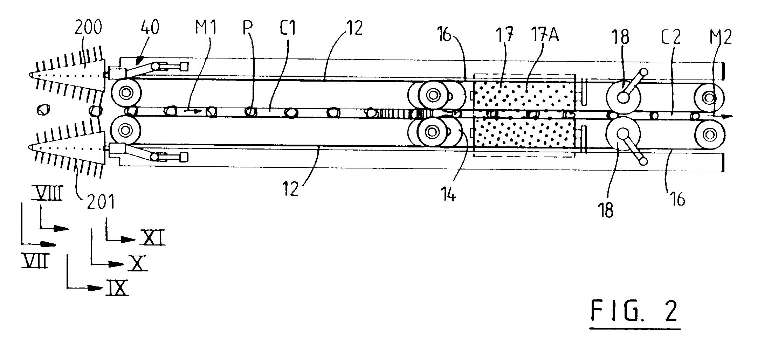

* la figure 2 est une vue partielle le long de la ligne II-II de la machine de la figure 1:

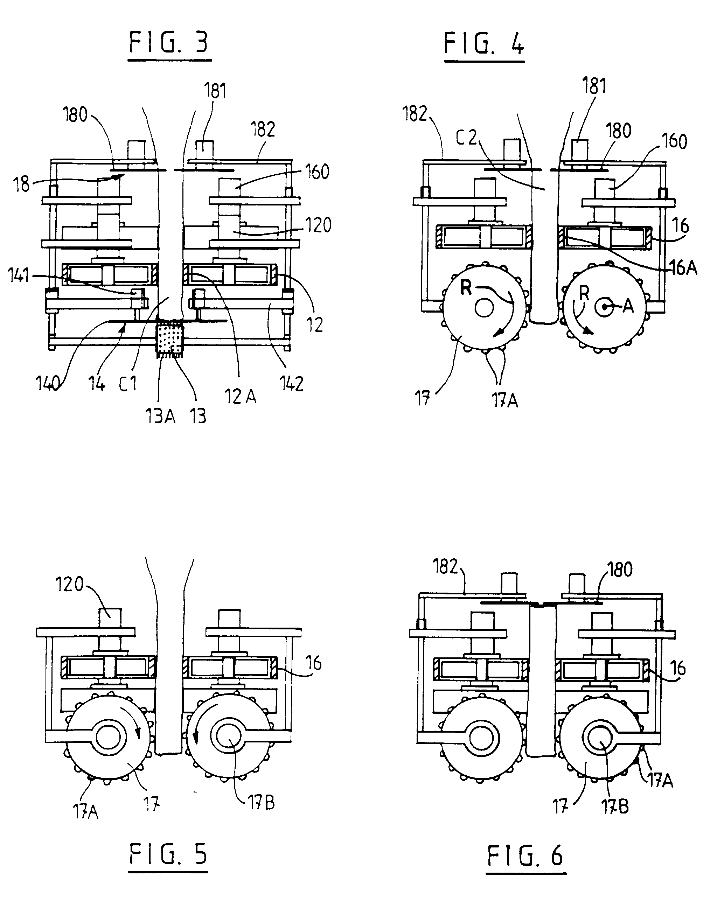

* les figures 3 à 6 sont des vues partielles de la machine le long des lignes III-III, IV-IV. V-V et VI-VI ;
* les figures 7 et 8 sont des vues partielles latérale et de devant montrant la position des brosses par rapport à un poireau à redresser ou à maintenir droit :
* les figures 9 et 10 sont des vues similaires aux figures 7 et 8 montrant le redressement partiel d'un poireau;
* les figures 11 et 12 sont des vues similaires aux figures 7 et 8 montrant le redressement du poireau lors qu'il est adjacent de l'extrémité arrière des brosses, et
* les figures 13 à 18 sont des vues similaires aux figures 7 à 10 montrant le redressement des feuilles d'un poireau par les brosses.

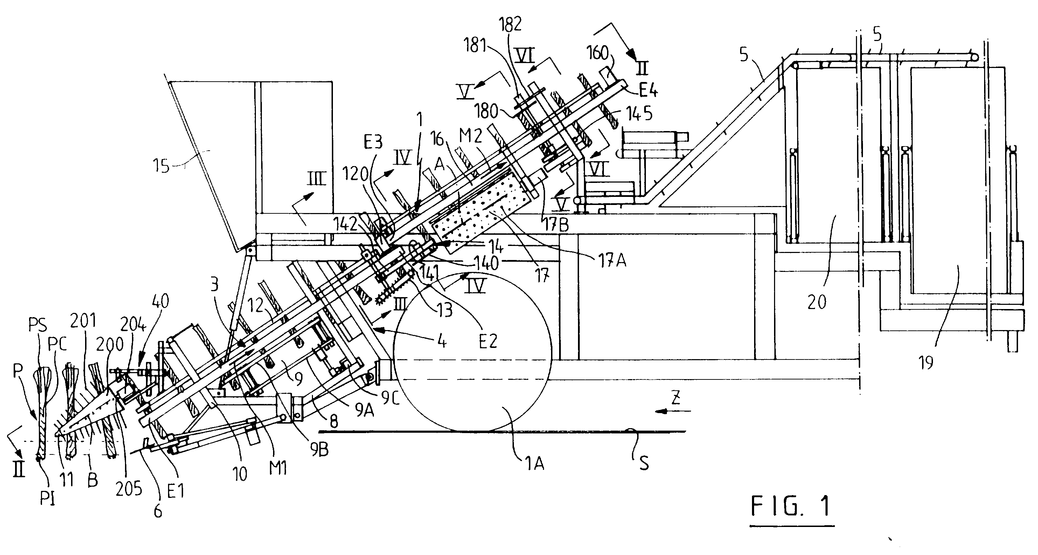

La machine représentée à la figure 1 est une machine pour récolter des poireaux alignés le long d'une ou de lignes de plantation parallèles, cette machine comprenant un châssis mobile 1 comprenant :
* des roues 1A agencées pour rouler entre deux rangées ou lignes de poireaux ;
* une cabine de pilotage 15 ;
* un outil 6 tel qu'un couteau ou un soc de charrue, destiné à être engagé dans la terre sensiblement sous les poireaux P à récolter pour les soulever du sol, lesdits poireaux P présentant une partie inférieure PI attachée aux racines, une partie supérieure PS constituée de feuilles de poireaux, et une partie centrale PC située entre la partie inférieure et la partie supérieure ;
* un dispositif 3 de préhension et de mise en mouvement des poireaux soulevés, ce dispositif étant constitué :
   - d'une première série de deux bandes transporteuses 12 présentant des faces 12A tournées l'une vers l'autre et définissant entre elles un canal C1 le long duquel les poireaux P sont guidés et maintenus en position, ledit canal C1 présentant une extrémité d'entrée E1 des poireaux soulevés du sol dans le canal et une extrémité E2 de sortie des poireaux P,
   - d'au moins un moteur 120 pour entraîner en mouvement M1 les bandes transporteuses 12 de la première série de manière à ce que les faces tournées l'une vers l'autre des bandes se déplacent dans une même direction pour déplacer les poireaux depuis l'extrémité d'entrée E1 jusqu'à l'extrémité de sortie E2,
   - d'une deuxième série de bandes transporteuses 16 présentant des faces 16A tournées l'une vers l'autre et définissant entre elles un canal C2 le long duquel les poireaux sont guidés et maintenus en position, ledit canal présentant une extrémité d'entrée E3 des poireaux provenant de la première série et une extrémité de sortie E4 des poireaux,
   - d'au moins un moteur 160 pour entraîner en mouvement M2 les bandes transporteuses de la deuxième série de manière à ce que les faces tournées l'une vers l'autre des bandes se déplacent dans une même direction pour déplacer les poireaux depuis l'extrémité d'entrée E3 jusqu'à l'extrémité de sortie E4,
* des moyens pour éliminer de la terre attachée aux poireaux au cours de leur déplacement par le dispositif de préhension ;
* des moyens de coupe 14 de la partie inférieure et des moyens de coupe 18 de la partie supérieure des poireaux lors de leur déplacement par le dispositif de préhension 3.

Les moyens pour éliminer de la terre au cours de leur déplacement par le dispositif de préhension 3 sont:
- un dispositif vibrant 9 agissant sur la partie inférieure des poireaux et/ou sur la tranche de terre soulevée par l'outil 6, ce dispositif 9 comportant un plateau inférieur 9A portant deux barres 9B, ledit plateau et barres étant entraînés en vibration par un moteur 9C, ledit plateau et lesdites barres formant une sorte de gouttières vibrantes assurant l'élimination de la plus grosse partie de la tranche de terre soulevée en même temps que les poireaux ;
- une bande 13 munie de doigts 13A perpendiculaires à la bande et agencés pour éliminer de la terre encore présente au niveau des racines du poireau (les doigts de préférence sensiblement rigides entrant dans la terre située sous la partie inférieure du poireau pour la briser ou la disloquer, cette élimination étant opérée avant la coupe de la partie inférieure du poireau pour assurer une coupe aisée et correcte); et
- un ensemble de deux tambours 17 distants l'un de l'autre et entre lesquels les poireaux entraînés par les bandes 16 se déplacent, la surface latérale cylindrique des tambours 17 étant munie d'une série de protubérances déformables ou flexibles 17A, chaque tambour étant entraîné en rotation R par un moteur 17B autour d'un axe A parallèle à la direction M2 du mouvement des bandes 16, les surfaces cylindriques desdits tambours touchant la partie inférieure et éventuellement la partie centrale des poireaux. Cet ensemble de deux tambours exercent un effort vers le bas sur les poireaux, cet effort se traduisant par un pelage du poireau.

La deuxième série de bandes transporteuses enserrent les poireaux à un niveau situé au-dessus du niveau auquel les poireaux sont enserrés par la première série de bandes transporteuses.

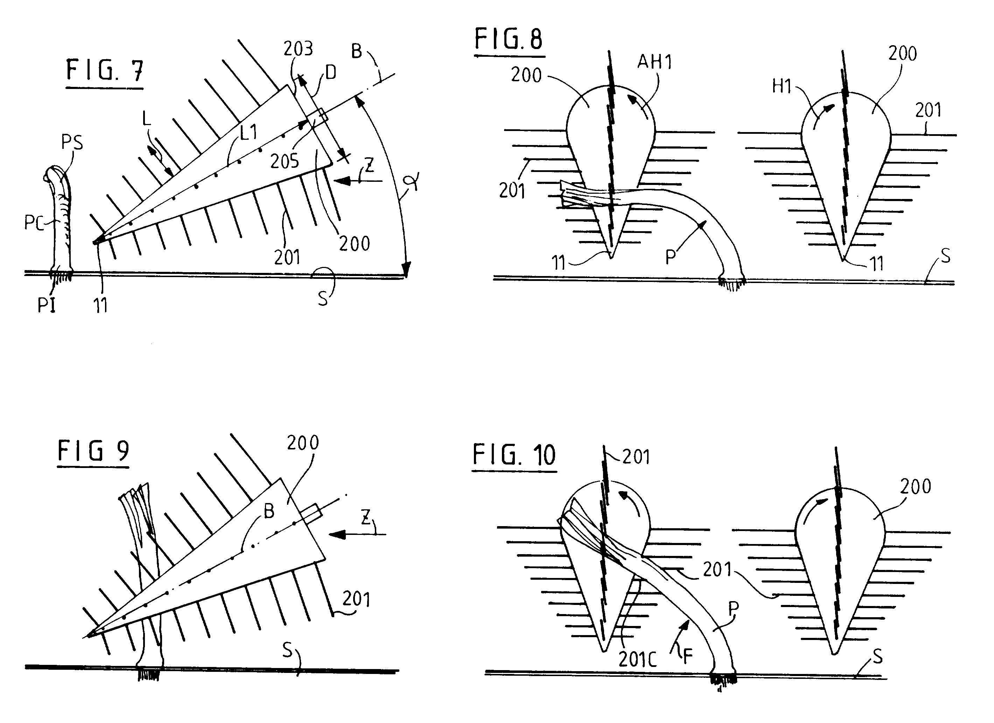

La machine comporte des moyens 2 pour soulever ou redresser les poireaux P par rapport au sol S avant que ceux-ci soient soulevés par l'outil 6 hors du sol, lesdits moyens étant constitués de deux supports 200 entre lesquels passent les poireaux P à récolter, lesdits supports étant munis de poils flexibles 201 et étant entraînés en rotation par un moteur 202, lesdits supports étant entraînés en rotation chacun le long d'un axe B incliné par rapport au sol S et s'étendant chacun entre une extrémité arrière 203 tournée vers le dispositif de préhension et une extrémité avant 1 1 opposée à l'extrémité arrière 203, les poils 201 portés par lesdits supports 200 au voisinage de l'extrémité avant 11 ayant une longueur L moindre que celle des poils portés par lesdits supports au voisinage de l'extrémité arrière 203. de sorte que les poireaux P sont redressés progressivement et sans dommage. Les supports 200 sont entraînés respectivement en rotation dans un sens horlogique H1 et dans un sens antihorlogique AH1 de manière à exercer un effort vers le haut sur les poireaux, c'est-à-dire d'exercer une force progressive sur les poireaux pour les redresser ou les maintenir dans une position droite ou debout.
Ceci ressortira de la description détaillée des figures 7 à 12.

Les supports 200 avantageusement de forme conique sont par exemple réalisés en une matière synthétique rigide monté sur un arbre 205 se terminant par une pointe 11 destinée à être engagée la première dans le sol. Les supports ont avantageusement une longueur L1 de 50 à 100 cm, en particulier de 60 à 90 cm (par exemple environ 70 à 75 cm), un diamètre D de 3 à 10 cm, en particulier de 3,5 à 7,5 cm. Les poils 202 sont disposés en quatre rangées parallèles à l'axe B. Les poils sont avantageusement réalisés en nylon du type RILSAN ® et présentent un diamètre de 0,5 à 1 mm, en particulier de 0.5 à 0,7 mm. La longueur maximale des poils L varie par exemple entre 2 et 10 cm. La vitesse de rotation des supports est avantageusement supérieure à 300 tours par minute, et est de préférence d'environ 500 tours par minute. Par exemple la longueur de poils varie progressivement d'environ 2 cm au voisinage de la pointe 11 à environ 7 cm au voisinage de l'extrémité arrière 203 du support. Les poils flexibles 201, avant flexion, sont sensiblement perpendiculaires à la surface latérale du support 200 et sont donc, avant flexion, inclinés par rapport à l'axe de rotation. Lors de la rotation des supports à une vitesse supérieure à 300 tours par minute en particulier supérieure à 500 tours par minute les poils élastiques ou flexibles acquièrent une rigidité suffisante pour casser des mottes de terre adjacente des racines, sans toutefois être trop importante pour éviter de détériorer ou abîmer le poireau. Dans la forme de réalisation représentée, les poils sont agencés le long de lignes droites s'étendant entre la pointe 1 1 et la partie arrière 203.

Les moyens de coupe 14 et 18 consistent chacun en une série de deux disques 140. 180 entraînés en rotation par des moteurs 141, 181 montés sur des bras 142,182 dont la position peut être ajustée pour ajuster la hauteur ou niveau de la coupe. Eventuellement, l'arbre portant le disque 180 porte également un disque inférieur 145 destiné à couper la partie inférieure. Dans ce cas, la longueur de la partie centrale des poireau qui seront mis en botte est déterminée par la distance séparant les disques 180 et 145.

Le dispositif de préhension 3 et les moyens de redressement 2 sont montés sur le châssis au moyen d'un dispositif permettant de régler ou de contrôler l'inclinaison des bandes transporteuses 12 par rapport au sol S. De plus, un dispositif 40 permet de régler l'inclinaison a de l'axe de rotation B des brosses 200 par rapport au sol. L'axe de rotation des brosses B est avantageusement parallèle à l'axe central C du canal C1.

Le premier moyen de coupe 14 de la partie inférieure et le deuxième moyen de coupe 18 de la partie supérieure du poireau sont situés respectivement au voisinage de l'entrée E3 de la deuxième série de bandes transporteuses et au voisinage de la sortie E4 de la deuxième série de bandes transporteuses.

Une ou des bandes transporteuses 5 conduisent alors la partie centrale PC des poireaux P vers un récipient 19 et la partie supérieure ou verdure PS vers un autre récipient 20. Avantageusement un dispositif aspirant est utilisé pour amener la partie supérieure des poireaux coupés ou verdure vers le récipient 20.

L'invention a également pour objet un procédé pour récolter des poireaux alignés le long d'une ou de lignes de plantation parallèles, au moyen d'une machine suivant l'invention, lesdits poireaux présentant une partie inférieure attachée aux racines, une partie supérieure constituée de feuilles de poireaux, et une partie centrale située entre la partie inférieure et la partie supérieure, dans lequel
* on soulève du sol les poireaux à récolter en engageant dans la terre sensiblement sous les poireaux à récolter un outil ;
* on déplace les poireaux soulevés du sol en engageant lesdits poireaux dans le canal formé entre les faces tournées l'une vers l'autre des bandes transporteuses de la première série, lesdites faces étant entraînées dans une même direction pour déplacer les poireaux depuis l'extrémité d'entrée jusqu'à l'extrémité de sortie,
* on déplace les poireaux sortant de la première série de bandes transporteuses en engageant lesdits poireaux dans le canal formé entre les faces tournées l'une vers l'autre des bandes transporteuses de la deuxième série, lesdites faces étant entraînées dans une même direction pour déplacer les poireaux depuis l'extrémité d'entrée jusqu'à l'extrémité de sortie d'une deuxième série de bandes transporteuses,
* on élimine de la terre attachée aux poireaux au cours de leur déplacement par des bandes transporteuses ; et
* on coupe la partie inférieure et la partie supérieure des poireaux lors de leur déplacement par des bandes transporteuses.
Le mouvement des poireaux dans la machine est représenté à la figure 1, tandis que les figures 7 et suivantes montrent schématiquement le redressement d'un poireau au moyen des brosses rotatives 200.

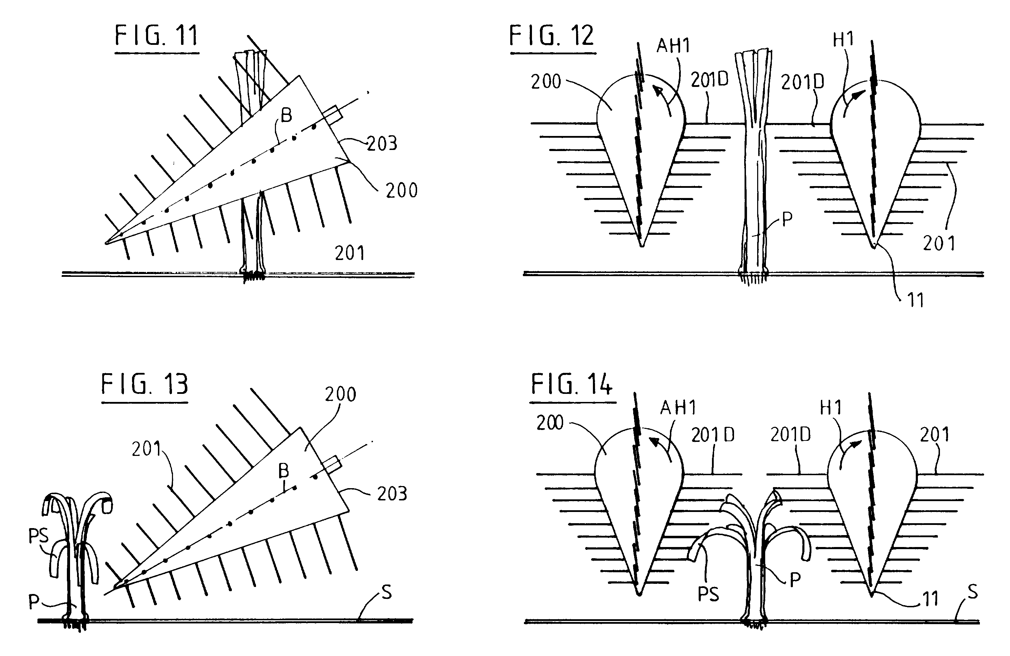

Lors de l'avancement de la machine (flèche Z), les poireaux P d'une rangée ou ligne sont amenés à passer entre deux supports rotatifs 200. Le poireau P incliné par rapport au sol est redressé progressivement du sol de la manière suivante. Lors de son passage dans l'espace situé entre les brosses rotatives 200, la pointe 11 d'une brosse 200 est amenée sous le poireau à redresser (figures 7 et 8). Ensuite, des poils 201 de cette brosse (dont la pointe a été engagée sous le poireau à redresser) touchent le poireau incliné et soumet sur ledit poireau un effort (F) tendant à le redresser (figures 9 et 10 qui montrent que les poils 201C touchent le poireau P). Lors de l'avancement de la machine (Z) d'autres poils 201 de la brosse 200 exercent un effort sur le poireau P. Les poils 201 de la brosse qui sont adjacents de l'extrémité arrière 203 permettent un redressement sensiblement complet du poireau. c'est-à-dire que ce dernier s'étend sensiblement dans une position debout ou droite par rapport au sol (figures 11 et 12, les poils 201D des deux brosses touchent le poireau P). Ce poireau redressé. dû au mouvement de la machine, est alors soulevé par l'outil 6 et la bande de terre et de poireaux soulevés sont conduits vers le dispositif de préhension. Ici, les poireaux sont engagés dans le canal C1 situé entre les bandes transporteuses 12, qui déplacent les poireaux à une vitesse par exemple égale à la vitesse d'avancement de la machine ou légèrement supérieure à cette vitesse d'avancement. Les poireaux sont alors amené vers un dispositif vibrant pour éliminer la majeure partie de la terre de la bande soulevée (cette terre étant ramenée par une gouttière 9 dans le chenal formé dans la terre par l'outil 6) et ensuite vers une bande munie de doigt rigide pour enlever la terre située au niveau des racines des poireaux. Après ces étapes, le poireau passe dans le canal situé entre deux autres bandes transporteuses, dont la vitesse de déplacement est identique ou non à celle des deux premières bandes transporteuses. Avantageusement, la vitesse d'avancement de ces deux autres bandes transporteuses est plus faible pour permettre un tranchage plus correct des poireaux par les dispositifs de coupe. La vitesse d'avancement de ces deux autres bandes dépendra de l'espacement entre deux poireaux adjacents d'une rangée. Ensuite, la partie inférieure des poireaux est coupée, cette partie retombant avantageusement sur le sol pour pouvoir servir d'engrais. Le poireau passe ensuite entre les rouleaux 17 pour enlever une couche ou une pelure du poireau. Enfin, le poireau est tranché par un dispositif de coupe pour éliminer la verdure ou partie supérieure du poireau et par un dispositif inférieur assurant que la partie centrale du poireau a une longueur adéquate et pour assurer que la couche ou pelure arrachée par les tambours 17 ne reste pas attachée à une partie du poireau située vers le bas. Les parties centrales des poireaux sont alors amenées vers des conteneurs.

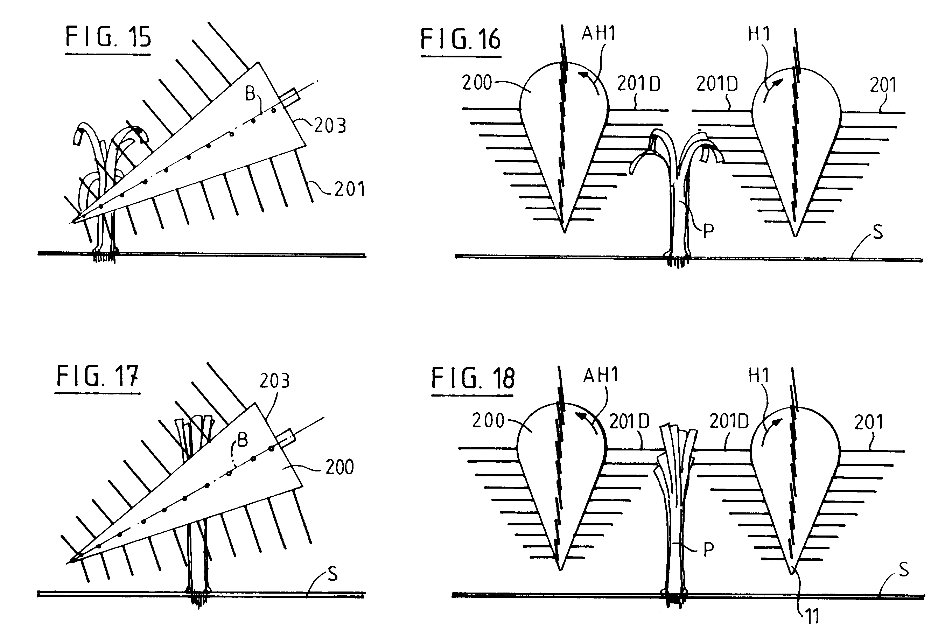

Les figures 13 à 18 montrent le redressement des feuilles PS d'un poireau au moyen des brosses 200,201 mises en rotation. Dans la position représentée aux figures 13 et 14. le poireau n'est pas encore engagé dans l'espace situé entre les deux brosses rotatives 200,201. Lors de l'avancement Z de la machine, le poireau P est engagé dans l'espace entre les brosses 200,201. Lors de cet engagement les poils 201 des brosses touchent les feuilles PS courbées vers le bas des poireaux en exerçant sur celles-ci un effort F pour les redresser. (voir figures 15 et 16) Lorsque le poireau est adjacent de l'extrémité 203 des brosses, les feuilles du poireau P sont redressées (position droite ou verticale), de sorte que le poireau se présente dans une position adéquate pour entrer dans le canal C1 entre les bandes 12, La terre éventuellement présente sur les feuilles PS est éliminée par l'action des poils sur les feuilles.

Bien que dans les formes de réalisation représentées, les axes de rotation B se situent dans des plans verticaux parallèles, les axes de rotation des brosses peuvent si nécessaire s'étendre dans des plans verticaux inclinés l'un vers l'autre.

Il est également évident que la machine peut comporter plusieurs séries de brosses rotatives, plusieurs couteaux ou outils et plusieurs dispositifs de préhension pour pouvoir récolter des poireaux de lignes ou rangées parallèles simultanément.

## Revendications

1. Machine pour récolter des poireaux (P) alignés le long d'une ou de lignes de plantation parallèles, cette machine (1) comprenant un châssis mobile comprenant :
* un outil (6) destiné à être engagé dans la terre sensiblement sous les poireaux (P) à récolter pour les soulever du sol, lesdits poireaux (P) présentant une partie inférieure (PI) attachée aux racines, une partie supérieure (PS) constituée de feuilles de poireaux, et une partie centrale (PC) située entre la partie inférieure (PI) et la partie supérieure (PS);
* un dispositif de préhension (3) et de mise en mouvement des poireaux soulevés, ce dispositif étant avantageusement constitué :
- d'une première série de deux bandes transporteuses (12) présentant des faces (12A) tournées l'une vers l'autre et définissant entre elles un canal (C1) le long duquel les poireaux (P) sont guidés et maintenus en position, ledit canal (C1) présentant une extrémité d'entrée (E1) des poireaux (P) soulevés du sol dans le canal (C1) et une extrémité de sortie (E2) des poireaux,
- d'au moins un moteur (120) pour entraîner en mouvement les bandes transporteuses (12) de la première série de manière à ce que les faces (12A) tournées l'une vers l'autre des bandes se déplacent dans une même direction (M1) pour déplacer les poireaux depuis l'extrémité d'entrée (E1) jusqu`à l'extrémité de sortie (E2),
- d'une deuxième série de bandes transporteuses (16) présentant des faces (16A) tournées l'une vers l'autre et définissant entre elles un canal (C2) le long duquel les poireaux (P) sont guidés et maintenus en position, ledit canal (C2) présentant une extrémité d'entrée (E3) des poireaux (P) provenant de la première série (12) et une extrémité de sortie (E4) des poireaux.
- d'au moins un moteur (160) pour entraîner en mouvement les bandes transporteuses (16) de la deuxième série de manière à ce que les faces tournées l'une vers l'autre des bandes se déplacent dans une même direction (M2) pour déplacer les poireaux (P) depuis l'extrémité d'entrée (E3) jusqu'à l'extrémité de sortie (E4),
* des moyens (9,13) pour éliminer de la terre attachée aux poireaux (P) au cours de leur déplacement par le dispositif de préhension (3);
* des moyens de coupe (14,18) de la partie inférieure (PI) et de la partie supérieure (PS) des poireaux lors de leur déplacement par le dispositif de préhension (3).

2. Machine suivant la revendication 1, caractérisée en ce qu'elle comporte des moyens agissant sur les poireaux ou partie de ceux-ci pour amener ou maintenir lesdits poireaux ou partie de ceux-ci debout ou droit par rapport au sol avant que ceux-ci soient soulevés par l'outil hors du sol, lesdits moyens étant constitués de deux supports (200) entre lesquels passent les poireaux à récolter, lesdits supports étant munis de poils flexibles (201) et étant entraînés en rotation par un moteur (204).

3. Machine suivant la revendication 2, caractérisée en ce que lesdits supports (200) sont entraînés en rotation chacun le long d'un axe (B), de préférence incliné par rapport au sol (S) et s'étendant chacun entre une extrémité arrière (203) tournée vers le dispositif de préhension (3) et une extrémité avant (11) opposée à l'extrémité arrière (203), les poils (201) portés par lesdits supports (200) au voisinage de l'extrémité avant ayant une longueur (L) moindre que celle des poils portés par lesdits supports au voisinage de l'extrémité arrière (203), de sorte que les poireaux ou partie de ceux-ci sont progressivement redressés par rapport au sol.

4. Machine suivant la revendication 3, caractérisée en ce que les supports (200) ont une forme sensiblement en tronc de cône ou en cône, la surface latérale duquel portant les poils flexibles (201).

5. Machine suivant l'une des revendication 2 à 4. caractérisée en ce que les moteurs (204) sont adaptés pour entraîner un premier support (200) dans le sens anti-horlogique (AH1) et le deuxième support (200) dans le sens horlogique (AH) pour soulever le ou les poireaux ou partie de ceux-ci situés entre les supports (200) en rotation.

6. Machine suivant la revendication 4, caractérisée en ce que les supports (200) ont une longueur (L1) comprise entre 50 et 150 mm et un diamètre maximum (D) inférieur à 100 mm.

7. Machine suivant la revendication 4 ou 6, caractérisée en ce que les poils (201) sont disposés en rangées parallèles à l'axe de rotation (B) du support (200) et en ce que la longueur (L) des poils (201) croît progressivement depuis l'extrémité avant (11) vers l'extrémité arrière (203).

8. Machine suivant l'une des revendications 4, 6 et 7, caractérisée en ce que les poils flexibles (201), avant flexion, sont sensiblement perpendiculaires à la surface latérale du support (200).

9. Machine suivant l'une des revendications précédentes, caractérisée en ce que le premier moyen de coupe (14) de la partie inférieure (PI) et le deuxième moyen de coupe (18) de la partie supérieure (PS) du poireau (P) sont situés respectivement au voisinage de l'entrée (E3) de la deuxième série de bandes transporteuses (16) et au voisinage de la sortie (E4) de la deuxième série de bandes transporteuses (16).

10. Machine suivant la revendication 8, caractérisée en ce qu'elle comporte une série de deux tambours (17) entraînés en rotation par un moteur (17B) et situés sous la deuxième série de bandes transporteuses (16), lesdits tambours (17) présentant une surface latérale cylindrique munie de protubérances élastiques (17A), lesdits tambours (17) étant espacés l'un de l'autre pour former entre eux un espace dans lequel les poireaux (P) sont partiellement en contact avec les surfaces latérales cylindriques des tambours (17).

11. Machine suivant l'une des revendications précédentes, caractérisée en ce qu'elle comporte des moyens pour ajuster la position des moyens de coupe (14,18) par rapport au moyen de préhension (3).

12. Procédé pour récolter des poireaux alignés le long d'une ou de lignes de plantation parallèles, au moyen d'une machine suivant l'une quelconque des revendications précédentes, lesdits poireaux présentant une partie inférieure attachée aux racines, une partie supérieure constituée de feuilles de poireaux, et une partie centrale située entre la partie inférieure et la partie supérieure, dans lequel
* on soulève du sol les poireaux à récolter en engageant dans la terre sensiblement sous les poireaux à récolter un outil (6):
* on déplace les poireaux soulevés du sol en engageant lesdits poireaux dans le canal (C1) formé entre les faces (12A) tournées l'une vers l'autre des bandes transporteuses (12) de la première série, lesdites faces étant entraînées dans une même direction (M1) pour déplacer les poireaux (P) depuis l'extrémité d'entrée (E1) jusqu'à l'extrémité de sortie (E2),
* on déplace les poireaux (P) sortant de la première série de bandes transporteuses (12) en engageant lesdits poireaux dans le canal (C2) formé entre les faces (16A) tournées l'une vers l'autre des bandes transporteuses (16) de la deuxième série, lesdites faces étant entraînées dans une même direction (M2) pour déplacer les poireaux depuis l'extrémité d'entrée (E3) jusqu`à l'extrémité de sortie (E4) de la deuxième série de bandes transporteuses,
* on élimine de la terre attachée aux poireaux au cours de leur déplacement par des bandes transporteuses ; et
* on coupe la partie inférieure (PI) et la partie supérieure (PS) des poireaux (P) lors de leur déplacement par des bandes transporteuses.

13. Procédé suivant la revendication 12, caractérisé en ce qu'on amène ou maintient les poireaux ou une partie de ceux-ci droit ou debout avant que ceux-ci soient soulevés par l'outil hors du sol, en soumettant les poireaux ou partie de ceux-ci, avant le soulèvement du poireau hors du sol par l'outil, à l'action de poils flexibles (201) de deux supports (200), chacun desdits supports étant mis en rotation.

14. Procédé suivant la revendication 13, caractérisé en qu'on soumet les poireaux avant leur soulèvement par l'outil, à l'action de poils flexibles (201) de deux supports (200), chacun desdits supports (200) étant mis en rotation le long d'un axe (B) incliné par rapport au sol et s'étendant chacun entre une extrémité arrière (203) tournée vers le dispositif de préhension (3) et une extrémité avant (11) opposée à l'extrémité arrière (203), les poils (201) portés par lesdits supports au voisinage de l'extrémité avant ayant une longueur moindre que celle des poils portés par lesdits supports au voisinage de l'extrémité arrière, de manière à soulever progressivement les poireaux ou partie de ceux-ci pour amener les poireaux ou partie de ceux-ci dans une position sensiblement debout ou droite.

15. Procédé suivant la revendication 13 ou 14. caractérisé en ce qu'on met en rotation des supports (200) de forme sensiblement en tronc de cône ou en cône, la surface latérale duquel portant les poils flexibles, pour redresser progressivement les poireaux ou partie de ceux-ci avant le soulèvement des poireaux par l'outil.

16. Procédé suivant l'une des revendications 13 à 15, caractérisé en ce qu'on entraîne en rotation un premier support (200) dans le sens anti-horlogique (AH1) et le deuxième support (200) dans le sens horlogique (H1) pour exercer un effort (F) vers le haut sur les poireaux ou partie de ceux-ci situés entre les supports en rotation.

17. Procédé suivant l'une des revendications 14 à 16, caractérisé en ce qu'on soumet les poireaux avant leur soulèvement à l'action de poils de longueur (L) croissant progressivement depuis l'extrémité avant (11) vers l'extrémité arrière (203) des supports.

18. Procédé suivant l'une des revendications 14 à 17, caractérisé en ce qu'on soumet les poireaux à l'action de poils flexibles (201). qui. avant flexion, sont sensiblement perpendiculaires à la surface latérale du support.

19. Procédé suivant l'une des revendications 12 à 18, caractérisé en ce qu'on coupe la partie inférieure (PI) et la partie supérieure (PS) du poireau (P) respectivement au voisinage de l'entrée de la deuxième série de bandes transporteuses et au voisinage de la sortie de la deuxième série de bandes transporteuses.

20. Procédé suivant la revendication 12, caractérisée en ce que, lors du déplacement (M2) des poireaux (P) par la deuxième série de bandes transporteuses. on soumet les poireaux à l'action d'une série de deux tambours entraînés en rotation. lesdits tambours (17) présentant une surface latérale cylindrique munie de protubérances élastiques. lesdits tambours étant espacés l'un de l'autre pour former entre eux un espace dans lequel les poireaux sont partiellement en contact avec les surfaces latérales cylindriques des tambours (17).

21. Procédé pour récolter des poireaux alignés le long d'une ou de lignes de plantation parallèles, au moyen d'une machine suivant l'une quelconque des revendications précédentes, lesdits poireaux présentant une partie inférieure attachée aux racines, une partie supérieure constituée de feuilles de poireaux. et une partie centrale située entre la partie inférieure et la partie supérieure, dans lequel avant de soulever du sol les poireaux au moyen d'un outil engagé dans le sol, on soumet les poireaux ou au moins la partie supérieure de ceux-ci, à l'action de poils flexibles (201) de deux supports (200) mis en rotation le long d'un axe (B) incliné par rapport au sol de manière à soulever progressivement les poireaux ou la partie supérieure de ceux-ci pour les amener dans une position sensiblement debout ou droite.

22. Procédé suivant la revendication 21, caractérisé en ce qu'on entraîne en rotation un premier support (200) dans le sens anti-horlogique (AH1) et le deuxième support (200) dans le sens horlogique (H1) pour exercer un effort (F) vers le haut sur les poireaux situés entre les supports en rotation.
